# DEMANDE DE BREVET EUROPEEN

(11) **EP 0 986 286 A1**
(43) Date de publication de la demande: **15.03.2000**
(21) Numéro de dépôt: 99402138.4
(22) Date de dépôt: 27.08.1999
(51) Int. Cl.: H04Q 11/04, H04Q 7/38

(54) **Réseau d'accès pour des terminaux mobiles**

(30) Priorité: 11.09.1998 FR 9811527
(71) Demandeur: FRANCE TELECOM, 75015 Paris (FR)
(72) Inventeur: Quinquis, Jean-Paul, 22700 Perros-Guirec (FR); Roussel, Olivier, 22700 Perros-Guirec (FR)
(74) Mandataire: Maillet, Alain

(57) **Abrégé**

L'invention concerne un réseau d'accès pour des terminaux mobiles du type qui est constitué d'un commutateur (VCX) connecté, d'une part, à au moins un autre réseau extérieur et, d'autre part, un réseau local d'accès (RLA) lui-même connecté à une pluralité de bornes radio (BR), chaque borne (BR) étant prévue pour entrer en communication aux moyens de ressources radio avec des terminaux mobiles (MT).

Il est caractérisé en ce que les protocoles d'établissement et de libération des canaux de signalisation et des canaux usager entre ledit commutateur (VCX) et un terminal (MT) et des protocoles de sécurisation (SSCOP) desdits canaux sont mis en oeuvre, uniquement au niveau dudit commutateur (VCX) et desdits terminaux (MT), par échange de messages de signalisation entre eux, et en ce qu'il comporte un serveur d'adaptation (ARX) qui est prévu pour intercepter de manière transparente les messages émis par lesdits protocoles de signalisation et pour mettre en oeuvre, en fonction du contenu desdits messages interceptés, des protocoles de gestion dudit réseau local d'accès (RLA) afin d'effectuer l'établissement et la libération des canaux de signalisation puis des canaux usager dans ledit réseau local d'accès et d'en réserver les ressources radio correspondantes.

## Description

La présente invention concerne un réseau d'accès pour des terminaux mobiles du type qui est constitué d'un commutateur connecté, d'une part, à au moins un autre réseau extérieur et, d'autre part, à un réseau local d'accès lui-même connecté à une pluralité de bornes radio, chaque borne étant prévue pour entrer en communication avec des terminaux mobiles.

La présente invention se situe dans le cadre des réseaux d'accès pour mobiles fondés sur la technologie ATM (Asynchronous Transfer Mode = mode de transfert asynchrone). Plus précisément, elle concerne les réseaux d'accès pour mobiles qui sont fondés sur la technologie ATM de bout en bout et, ce à la fois dans le plan de contrôle et dans le plan usager. En conséquence, les terminaux mobiles envisagés dans la présente invention supportent des applications qui justifient l'utilisation de cette technologie ATM prévue pour le transfert de données à des débits élevés. Parmi ces applications, on peut citer, à titre d'exemple : la visiophonie, les transmissions de données à hauts débits, la consultation de serveurs Internet, etc.

Dans les réseaux d'accès à des mobiles connus, la technologie ATM n'est envisagée que jusqu'à l'accès à la borne radio, encore appelée station de base. Dans ces réseaux connus, les terminaux mobiles ne peuvent pas supporter les piles des protocoles qui sont spécifiques à cette technologie ATM, à savoir les protocoles de sécurisation de niveau 2 tels que le protocole normalisé nommé SSCOP, et les protocoles d'établissement/libération tels que le protocole normalisé nommé Q2931. Aussi, le domaine d'applications visé est généralement celui des réseaux cellulaires de radiocommunications.

Dans un réseau large bande tel qu'un réseau du type ATM, les liaisons de signalisation sont sécurisées au niveau 2 par un protocole de sécurisation, tel que celui normalisé nommé SSCOP. Ainsi, l'acheminement des messages de signalisation d'établissement/libération des connexions dans le plan usager, tels que ceux qui sont émis par le protocole normalisé Q2931 suppose donc l'établissement préalable d'une liaison de niveau 2.

On rappelle que le protocole SSCOP assure notamment la sécurisation des liaisons de signalisation et contrôle en permanence l'intégrité des connexions entre les terminaux MT et le commutateur VCX.

Dans le cas d'un réseau pour des terminaux fixes, la liaison virtuelle qui transporte les cellules des messages de signalisation entre un terminal et son commutateur de rattachement est permanente si bien que le protocole de sécurisation SSCOP est automatiquement déclenché dès la mise sous tension du terminal et il contrôle en permanence l'intégrité des connexions établies entre le commutateur et le terminal, même lorsque ceux-ci n'échangent pas de données dans le plan usager. Ainsi, ces connexions sécurisées par la mise en oeuvre du protocole SSCOP ne sont rompues que lorsque le terminal ou le commutateur sont mis hors tension ou, éventuellement, lorsque la liaison physique entre le terminal et le commutateur est coupée.

Dans le cas d'un réseau pour des terminaux mobiles, le maintien d'une telle liaison virtuelle ne peut pas être assuré en permanence dans la mesure où elle consommerait des ressources radio et que ces dernières sont rares et chères.

Par ailleurs, un réseau local d'accès pour terminaux mobiles ATM présente par rapport aux réseaux d'accès pour terminaux fixes des différences qui soulèvent des problèmes spécifiques notamment au niveau de la mise en oeuvre des procédures de signalisation. Ces problèmes sont mentionnés ci-dessous.

En plus du traitement des appels par le commutateur, un réseau pour terminaux mobiles intègre les fonctions d'établissement et de libération des connexions virtuelles internes et de réservation des ressources ATM et des ressources radio. Ces opérations sont gérées appel par appel.

De plus, les demi-appels entrants où un terminal du réseau peut être appelé par un autre terminal mettent en oeuvre un processus de localisation ou de recherche du terminal appelé par diffusion d'une requête vers tous les mobiles localisés sous la couverture du réseau.

Le but de la présente invention est de proposer un réseau d'accès pour des terminaux mobiles dont les liaisons pour le transport des messages de sécurisation émis par le protocole de sécurisation SSCOP sont gérées à la demande, c'est-à-dire uniquement pendant la durée des communications. De plus, un tel réseau résout les problèmes évoqués ci-dessus.

A cet effet, un réseau d'accès pour des terminaux mobiles selon l'invention est caractérisé en ce que les protocoles d'établissement et de libération des canaux de signalisation et des canaux usager entre ledit commutateur et un terminal et les protocoles de sécurisation desdits canaux sont mis en oeuvre, uniquement au niveau dudit commutateur et desdits terminaux, par échange de messages de signalisation entre eux, et en ce qu'il comporte un serveur d'adaptation qui est prévu pour intercepter de manière transparente les messages émis par lesdits protocoles de signalisation et pour mettre en oeuvre, en fonction du contenu desdits messages interceptés, des protocoles de gestion dudit réseau local d'accès afin d'effectuer l'établissement et la libération des canaux de signalisation puis des canaux usager dans ledit réseau local d'accès et d'en réserver les ressources radio correspondantes.

Selon une autre caractéristique de l'invention, lorsque le commutateur reçoit une demande de connexion avec un terminal qui se trouve sous la couverture dudit réseau, un processus de recherche de terminal est lancé par ledit serveur d'adaptation auquel ledit terminal répond en réservant les ressources radio nécessaires au trafic de signalisation puis par l'envoi d'un message d'acquittement, ledit serveur déterminant alors les identifiants d'un canal de signalisation dans ledit réseau local d'accès et établissant ledit canal de signalisation.

Selon une autre caractéristique de l'invention, lorsque ledit commutateur reçoit une demande de connexion avec un terminal qui se trouve sous la couverture dudit réseau, il émet un message de déclenchement du protocole de sécurisation dont l'interception par ledit serveur déclenche ledit processus de recherche de terminal, ledit terminal transmettant un message d'acquittement lorsque ledit canal de signalisation est établi entre ledit terminal et ledit commutateur.

Selon une autre caractéristique de l'invention, si le commutateur n'a pas reçu de message d'acquittement à l'expiration d'un temps prédéterminé, il émet un nouveau message de déclenchement du protocole de sécurisation, le nombre de fois que le commutateur ré-émet des messages de déclenchement du protocole de sécurisation étant limité, par exemple à cinq.

Selon une autre caractéristique de l'invention, il comporte un serveur par lequel transite tous les messages de signalisation à destination dudit commutateur, ledit serveur, à la réception d'un message de demande de connexion avec un terminal qui se trouve sous la couverture dudit réseau, transmettant au serveur un message pour qu'il déclenche ledit processus de recherche de terminal, ledit terminal transmettant un message d'acquittement lorsque ledit canal de signalisation est établi entre ledit terminal et ledit commutateur.

Selon une autre caractéristique de l'invention, lorsqu'un terminal qui se trouve sous la couverture dudit réseau effectue un appel, il réserve les ressources radio nécessaires pour le trafic de signalisation puis émet un message de demande de connexion à destination du seul serveur d'adaptation qui détermine alors les identifiants d'un canal de signalisation dans ledit réseau local d'accès et établit ledit canal de signalisation.

Selon une autre caractéristique de l'invention, ledit message contient l'adresse logique temporaire qui a été attribuée audit terminal lorsque celui-ci était à l'état de veille sous la couverture dudit réseau, ledit serveur, à la réception dudit message, établissant une correspondance entre ladite adresse et lesdits identifiants dudit canal de signalisation.

Selon une autre caractéristique de l'invention, à l'issue de l'établissement dudit canal de signalisation, ledit protocole de signalisation pour la sécurisation de la liaison entre le commutateur et ledit terminal est déclenché.

Selon une autre caractéristique de l'invention, à l'issue de l'établissement du canal de signalisation dans ledit réseau local et après le déclenchement du protocole de sécurisation, le protocole d'établissement de la connexion dans le plan usager est mis en oeuvre, le serveur d'adaptation interceptant les messages émis par ledit protocole afin de réserver les ressources radio nécessaires au trafic usager et d'établir un canal usager dans ledit réseau local d'accès.

Selon une autre caractéristique de l'invention, ledit réseau local d'accès est constitué d'un réseau de distribution relié, pour sa connexion au commutateur, à un brasseur de conduits virtuels, ledit serveur d'adaptation étant relié en dérivation dudit brasseur de manière que seules les cellules portant dans leur en-tête des identificateurs de canaux spécifiques ou l'identificateur des canaux de signalisation au niveau dudit commutateur ou au niveau desdits terminaux, passent dans ledit serveur d'adaptation.

Selon une autre caractéristique de l'invention, un canal permanent point à point est établi entre chacune des bornes et le serveur d'adaptation pour le transport des cellules portant ledit message de demande d'appel émanant dudit terminal appelant se trouvant sous la couverture de la borne correspondante ou les cellules portant un message d'acquittement de recherche de terminal.

Selon une autre caractéristique de l'invention, entre le serveur d'adaptation et chaque borne, est établi un conduit virtuel permanent pour le transport des cellules portant des messages d'acquittement d'établissement de canal de signalisation, lesdites cellules portant un identificateur de circuit virtuel égal à l'identificateur de circuit virtuel dudit canal de signalisation.

Selon une autre caractéristique de l'invention, un canal permanent point à multipoint est établi entre le serveur d'adaptation et les bornes dudit réseau pour la diffusion du message de recherche de terminal.

Selon une autre caractéristique de l'invention, lorsque ledit serveur d'adaptation intercepte un message de libération émanant soit du commutateur, soit d'un terminal, il commande la libération les demi-connexions dans le réseau local d'accès et des ressources radio.

Selon une autre caractéristique de l'invention, il comporte des moyens pour masquer, pendant un temps prédéterminé, les messages de déclenchement du protocole de sécurisation émis par le commutateur ou un terminal lorsque la libération du canal de signalisation a eu lieu.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est un schéma synoptique d'un réseau d'accès pour des terminaux mobiles selon l'invention,
les Figs. 2a à 2d sont des schémas synoptiques montrant les connexions virtuelles du brasseur vers le serveur d'adaptation d'un réseau d'accès pour des terminaux mobiles selon l'invention,
la Fig. 3 illustre le fonctionnement d'un réseau selon l'invention dans le cas où un terminal sous la couverture dudit réseau appelle un autre terminal, et
la Fig. 4 illustre le fonctionnement d'un réseau selon l'invention dans le cas où un terminal quelconque appelle un autre terminal sous la couverture dudit réseau,
la Fig. 5 illustre le fonctionnement d'un réseau selon un autre mode de réalisation de l'invention, également dans le cas où un terminal quelconque appelle un autre terminal sous la couverture dudit réseau.

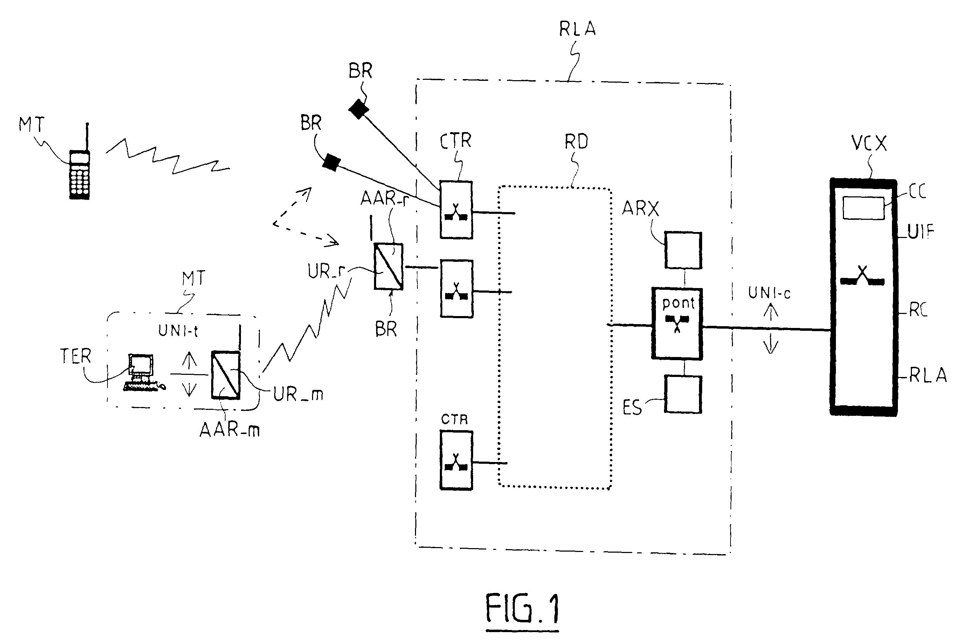

Le réseau d'accès pour des terminaux mobiles RLAM qui est représenté à la Fig. 1 est essentiellement constitué d'un commutateur VCX, d'un réseau local d'accès RLA et de bornes radio BR. Celles-ci sont destinées à entrer en communication avec des terminaux mobiles MT.

Le réseau local d'accès RLA est connecté, en amont, au commutateur VCX par l'intermédiaire, au niveau de la couche ATM, d'au moins une interface normalisée UNI_c (User Network Interface) et, en aval, aux bornes radio BR. Il est constitué d'un réseau de distribution RD connecté, d'une part, à un ensemble de concentrateurs CTR auxquels sont reliées les bornes BR et, d'autre part, à un brasseur de conduits virtuels PONT du type ATM assurant la connexion du réseau de distribution RD au commutateur VCX.

Le réseau de distribution RD et le brasseur PONT effectuent des fonctions de brassage de conduits virtuels VP (virtual path). Ces conduits sont permanents et établis à la mise en service du système. Chacun d'eux est dédié à un type donné de trafic (données usager, signalisation, etc.). Leur topologie est du type étoile avec fusion dans le sens montant (bornes BR vers commutateur VCX) et diffusion dans le sens descendant (commutateur VCX vers bornes BR). Ils sont identifiés par des identificateurs de conduit virtuels VPI de la manière exposée ci-après.

Le brasseur PONT permet, en outre, le passage des flux de données usager ou de signalisation à travers ou à destination de différents équipements serveurs, tel que celui quelconque que l'on a référencé ES. Ces équipements serveurs peuvent par exemple être un transcodeur, un opérateur de macrodiversité, une unité de traitement d'un protocole de sécurisation, un serveur de protocole de contrôle de flux, etc.

Un autre serveur ARX est représenté dont la description de la structure et du fonctionnement est faite ci-après.

Les concentrateurs CTR, selon un marquage donné de circuit virtuel, effectuent l'établissement et la libération des demi-connexions virtuelles lors des phases d'établissement et de rupture des communications et, éventuellement, pendant les phases où un mobile est en communication à la fois avec deux bornes BR connectées au réseau local RLA. Ces dernières phases sont dites phases de handover.

On appelle demi-connexions, les liaisons virtuelles comprises entre les bornes radio BR et l'accès au brasseur PONT.

On notera que toutes les demi-connexions qui aboutissent aux terminaux MT en communication présentent une topologie en étoile et sont de type point à point. En effet, elles convergent toutes vers l'interface UNI_c reliant le réseau d'accès RLA au commutateur VCX.

Chaque borne radio BR est constituée d'une unité ARR_r d'adaptation ATM/radio reliée, en amont à un concentrateur CTR et, en aval, à une unité radio UR_r qui est spécifique du système radio utilisé. Chaque terminal mobile MT est essentiellement constitué d'un terminal TER proprement dit qui est du type ATM tout à fait conforme aux normes et qui est relié à une unité AAR_m d'adaptation ATM/radio, par l'intermédiaire, au niveau de la couche ATM, d'une interface UNI-t. L'unité AAR_m est elle-même reliée à une unité radio UR_m qui est prévue pour pouvoir communiquer avec l'unité radio UR_r de chaque borne BR du réseau. L'unité UR_m est spécifique du système radio utilisé. Physiquement, le terminal TER, l'unité d'adaptation AAR_m et l'unité radio UR_m peuvent être intégrés dans le même équipement ou être au contraire séparés.

Le terminal TER supporte les piles des protocoles de signalisation large bande qui sont, par exemple, d'une part, celui de la couche de niveau 2 nommé SSCOP (service-specific connection-oriented protocol = protocole spécifique au service orienté connexion) de la couche d'adaptation dite S-AAL et, d'autre part, celui de la couche de niveau 3 qui est spécifié dans la recommandation ITU Q2931.

On rappelle que le protocole SSCOP assure la sécurisation des liaisons de signalisation et contrôle en permanence l'intégrité des connexions entre les terminaux MT et le commutateur VCX. Ce protocole est déclenché par un message de déclenchement BEGIN émis à la fois par le commutateur VCX et par les terminaux MT et pour lequel est attendu un acquittement BEGIN_Ack. A l'issue de cet acquittement, ce protocole permet l'envoi périodique de messages de test POLL dont il attend également le résultat STAT.

Quant au protocole d'établissement/libération Q2931, il est prévu pour assurer l'établissement et la libération des communications et, pour ce faire, il transmet des messages de requête dont il attend les acquittements. Parmi ceux-ci, on peut citer le message de demande de connexion Setup indiquant une demande d'établissement. Il est répondu à une telle demande par un message d'acquittement nommé Call_proceeding. On peut citer le message de lancement de la procédure de connexion Connect et son acquittement Connect_ack. On peut encore citer le message de libération de connexion Release et son acquittement Release_comp.

Chaque terminal peut offrir différents téléservices tels que la téléphonie, un accès au réseau dit internet et tout type de services multimédia, etc.

Le commutateur VCX est en amont relié par exemple à un ou plusieurs autres réseaux locaux d'accès à des mobiles RLAM de structure identique ou non à celui qui est représenté à la Fig. 1 et à un ou plusieurs réseaux commutés à terminaux fixes RC.

Le commutateur VCX a pour rôle d'établir les communications appel par appel à partir et vers les mobiles MT rattachés au réseau d'accès à des mobiles RLAM. Il le fait sous le contrôle d'une unité de commande d'appel CC(Call_Control).

Plus précisément, les demi-connexions assurant le trafic des cellules du plan usager sont reliées dans le commutateur VCX, soit vers des connexions sortantes, s'il s'agit de communications d'appels vers l'extérieur au réseau RLAM, soit vers des demi-connexions attachées à chaque mobile s'il s'agit de communications locales entre 2 mobiles rattachés au réseau RLAM.

La procédure d'appel peut être relayée vers un des réseaux auxquels le commutateur VCX est relié, ce qui peut nécessiter un équipement appelé unité d'interfonctionnement UIF pour assurer les fonctions de passerelle si les systèmes de signalisation sont différents.

A l'interface UNI_t, côté terminal MT, que ce soit dans le plan usager ou dans le plan de contrôle, l'identificateur VPI de conduit virtuel est unique et est généralement, à l'instar des réseaux d'accès pour terminaux fixes, égal à zéro. Quant à l'identificateur VCI de circuit virtuel dans le plan usager, il est choisi, pour une communication donnée, par le commutateur VCX au moment de l'établissement d'appel mis en oeuvre par le protocole d'établissement/libération Q2931 et est conservé pendant toute la durée de la communication. Il est appelé ci-dessous VCI_dat. Dans le plan de contrôle, il a une valeur fixée une fois pour toutes, par exemple égale à cinq (valeur normalisée).

A l'interface UNI_c, côté commutateur VCX, dans le plan usager aussi bien que dans le plan de contrôle, l'identificateur VPI de conduit virtuel est égal à la valeur VPI_u allouée au terminal MT lors de son arrivée sous la couverture du réseau d'accès pour des terminaux mobiles RLAM considérés. Il peut le faire soit par la mise en marche de son état de veille, soit déjà en communication et arrivant par conséquent d'un autre réseau d'accès pour des terminaux mobiles RLAM. Quant à l'identificateur VCI de circuit virtuel, il a une valeur qui est, dans le plan usager, égale à celle VCI_dat qui a été allouée, par le commutateur VCX, à l'interface UNI_t ci-dessus. En ce qui concerne le plan de contrôle, l'identificateur VCI est aussi égal à celui alloué à l'interface UNI_t, par exemple cinq.

Dans le réseau local d'accès RLA, chaque type de trafic (données usager, signalisation) est transporté dans des conduits virtuels VP permanents qui lui sont dédiés. Dans le sens montant (terminaux MT vers commutateur VCX), ces conduits virtuels VP ont pour origine les concentrateurs CTR et permettent d'aiguiller le trafic qu'ils transportent vers la direction qui convient : le commutateur VCX, un serveur ES tel qu'un équipement d'adaptation, un transcodeur, un opérateur de macrodiversité, une unité de traitement d'un protocole de sécurisation, ou le serveur d'adaptation ARX. Dans le sens descendant, ils aiguillent le trafic vers tous les concentrateurs CTR. La topologie des conduits virtuels VP est donc une fusion dans le sens montant et une diffusion dans le sens descendant. A titre d'exemple, le VPI affecté à une communication dans le plan usager est égal à 100.

A l'intérieur d'un conduit VP donné, les demi-connexions sont différenciées à l'aide d'un identificateur de circuit virtuel VCI. Il s'agit des identificateurs de circuit virtuel VCI du plan de contrôle appelé VCI_sig prévu pour supporter la signalisation de bout en bout et permettre notamment le transport des messages engendrés par les protocoles de sécurisation SSCOP et d'établissement/libération Q2931 ; il s'agit encore aussi des identificateurs de circuit virtuel VCI du plan usager VCI_dat servant à identifier les demi-connexions supportant les trafics usager.

Pour cette mise en oeuvre des identificateurs de conduit et circuit virtuels telle qu'elle vient d'être explicitée, des opérations de traduction sont effectuées au niveau des bornes BR et au niveau du brasseur PONT.

Comme cela a été mentionné ci-dessus, le réseau local d'accès RLA comporte encore un serveur d'adaptation ARX dont la fonction explicitée ci-dessous est l'établissement, la rupture, la mobilité des liaisons bidirectionnelles qui assurent le transfert du trafic des données usagers et le transfert des messages de signalisation dans le réseau local RLA.

Le serveur d'adaptation ARX peut être raccordé selon une des manières suivantes. Il peut être connecté sur le commutateur VCX en tant que serveur. Il peut également être connecté en coupure du multiplex UNI_c reliant le réseau d'accès RLA au commutateur VCX. Il peut enfin être connecté en dérivation sur le réseau d'accès RLA par l'intermédiaire du brasseur PONT.

En ce qui concerne les ports physiques d'accès, le serveur d'adaptation ARX peut disposer d'un seul accès bidirectionnel ou de 2 accès bidirectionnels, un accès pour le sens descendant des cellules (commutateur VCX vers bornes radio BR) et un accès pour le sens montant (bornes radio BR vers commutateur VCX).

Le raccordement en dérivation sur le brasseur PONT du serveur d'adaptation ARX avec un seul accès bidirectionnel présente l'avantage que la fonction d'adaptation de la signalisation aux problèmes de mobilité reste localisée dans le réseau d'accès RLA si bien que le commutateur VCX peut être un équipement standard ATM prévu à l'origine pour un réseau fixe.

Selon l'invention, le serveur d'adaptation ARX est transparent en ce qui concerne les cellules usager. Seules les cellules qui portent les messages de signalisation traversent le serveur ARX. Pour ce faire, les seules cellules qui sont détournées vers le serveur ARX sont les cellules contenant dans leur en-tête, au niveau des interfaces UNI_c ou UNI_t, un identificateur de circuit virtuel VCI égal à 5, valeur qui identifie en effet l'appartenance de ces cellules aux messages de signalisation, et ce, qu'elles arrivent du commutateur VCX ou du réseau de distribution RD.

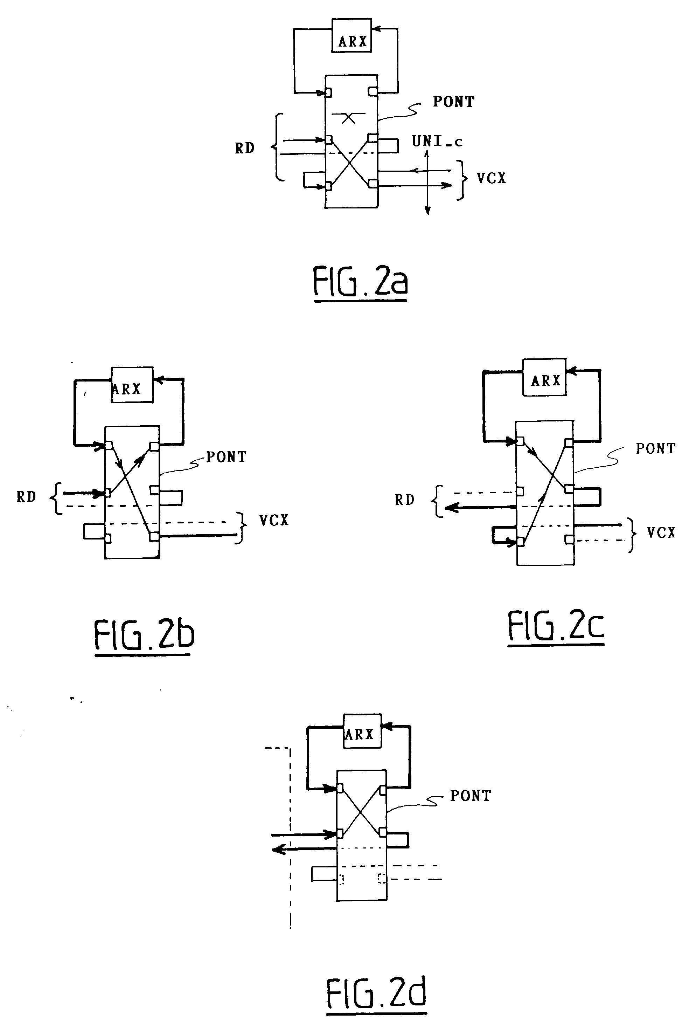

On a représenté à la Fig. 2a, les connexions dans le brasseur PONT en ce qui concerne les cellules usager. Les cellules issues du réseau de distribution RD sont transmises sur l'interface UNI_c au commutateur VCX et les cellules issues du commutateur VCX sont transmises au réseau de distribution RD. Ces cellules ne transitent donc pas par le serveur d'adaptation ARX.

A la Fig. 2b, on a représenté les connexions dans le brasseur PONT en ce qui concerne les cellules de signalisation montantes (bornes radio BR vers commutateur VCX) et, à la Fig. 2c, les connexions en ce qui concerne les cellules de signalisation descendantes (commutateur VCX vers bornes radio BR).

A la Fig. 2b, les cellules émanant du réseau de distribution RD sont aiguillées, dans le brasseur PONT, à l'entrée du serveur d'adaptation ARX, puis transitent dans ce dernier, et sont ensuite délivrées de nouveau au brasseur PONT où elles sont ré-aiguillées vers le commutateur VCX.

A la Fig. 2c, les cellules émanant du commutateur VCX sont aiguillées, dans le brasseur PONT, à l'entrée du serveur d'adaptation ARX, transitent dans ce dernier, et sont ensuite délivrées de nouveau au brasseur PONT où elles sont ré-aiguillées vers le réseau de distribution RD.

Les cellules qui transitent par le serveur ARX portent des identificateurs de conduit virtuel différents selon leur origine, soit les terminaux MT, soit le commutateur VCX. Par exemple, l'identificateur VPI = 10 indique qu'il s'agit de cellules appartenant à des messages de signalisation venant du commutateur VCX et l'identificateur VPI = 11 indique qu'il s'agit de cellules de signalisation venant du réseau RLA, c'est-à-dire des terminaux mobiles MT.

A la Fig. 2d, on a représenté les connexions pour les cellules de signalisation interne au réseau local d'accès RLA. Ces cellules, comme on le verra par la suite, portent des messages appartenant à des protocoles spécifiques au réseau local d'accès RLA mis en oeuvre au niveau du serveur ARX, par exemple pour assurer la fonction de recherche de l'adresse physique d'un terminal donné (fonction dite PAGING) ou les fonctions d'établissement et libération des connexions dans le réseau local RLA, dites ici fonctions PRSS. Comme on le verra également par la suite, les cellules ATM qui portent ces messages spécifiques seront identifiées par des identificateurs de conduit virtuel VPI et de circuit virtuel VCI réservés.

Le serveur d'adaptation ARX est prévu pour intercepter tous les messages de signalisation échangés entre le commutateur VCX et les terminaux mobiles MT et, ce, aussi bien dans le sens montant que dans le sens descendant. Il s'agit donc des messages de niveau 2 (par exemple les messages émis lors de la mise en oeuvre du protocole de sécurisation SSCOP) et des messages de niveau 3 ( par exemple des messages d'établissement/libération émis lors de la mise en oeuvre du protocole Q2931).

A la réception des cellules ATM de signalisation, le serveur d'adaptation ARX reconstitue les messages de signalisation par réassemblage de ces cellules. Pour ce faire, il met avantageusement en oeuvre une couche d'adaptation à ATM (ATM Adaptation Layer) de type 5 (AAL5) dont les fonctions sont décrites dans les recommandations de l'ITU.

Le serveur d'adaptation ARX analyse et décode les messages reçus et en fonction de la nature et du contenu de ces messages, il déclenche éventuellement une action qui peut être la mise en oeuvre d'un protocole de signalisation spécifique aux réseaux d'accès RLA, soit un protocole de recherche de terminal, protocole généralement connu sous le terme PAGING, soit un protocole PRSS de gestion des connexions dans le réseau local RLA, par exemple établissement/libération des connexions, gestion des ressources ATM et des ressources radio du réseau d'accès RLAM. Eventuellement, il peut également déclencher l'émission de messages de traces rendant compte de l'activité sur les liaisons de signalisation. Cette fonction peut être exploitée par l'administrateur du réseau pour des besoins de maintenance et de contrôles statistiques du trafic.

On notera que ces protocoles spécifiques concernent le serveur d'adaptation ARX et les équipements d'extrémités que sont les bornes radio et les terminaux mobiles. Aussi, les messages échangés par ces protocoles spécifiques sont véhiculés par des canaux permanents construits dans le réseau d'accès RLA. Ces canaux ont donc des identificateurs de conduit virtuel VPI et de circuit VCI réservés. Pour la circulation des messages de recherche de terminal PAGING, ces canaux permanents sont du type diffusion dans le sens descendant serveur ARX vers mobiles MT et point à point avec fusion dans le sens montant. En ce qui concerne les messages émis par le protocole de gestion des connexions dans le réseau RLA, ces canaux sont du type point à point dans les 2 sens.

Avantageusement, ces protocoles spécifiques (recherche de terminal PAGING et gestion des connexions PRSS) mettent en oeuvre soit des formats de messages limités à la taille d'une cellule ATM, soit des formats de type de ceux de la couche d'adaptation AAL5. Dans le premier cas les procédures sont plus simples et, dans le second cas, elles sont mieux sécurisées. En tout état de cause, selon la présente invention, ces messages de signalisation ne sont pas sécurisés par un protocole de sécurisation du type SSCOP.

Après avoir décodé un message et déclenché une action, le serveur ARX segmente ce message et le retransmet sous forme de cellules ATM. Si le message provient du commutateur VCX, il sera réémis vers un terminal MT. Par contre, si le message provient d'un terminal MT, il sera réémis vers le commutateur VCX. On rappelle que l'origine de ces messages est déterminée par le serveur ARX en fonction des identificateurs de conduit virtuels VPI portés par les en-têtes des cellules ATM. La direction est également déterminée par l'identificateur de conduit virtuel VPI.

Le serveur ARX, pour cette ré-émission, met avantageusement en oeuvre une couche d'adaptation à ATM (ATM Adaptation Layer) de type 5 (AAL5) dont les fonctions sont décrites dans les recommandations de l'ITU.

On constate que le serveur ARX est complètement transparent vis à vis des messages interceptés, à la fois sur le plan sémantique et sur le plan temporel. En d'autres termes, les contenus des messages ne sont pas modifiés et leur temps de traversée dans le serveur ARX est suffisamment court pour que les protocoles d'échange ne soient pas affectés et, par exemple, que des temporisateurs d'attente n'arrivent pas indûment à échéance soit dans le commutateur VCX, soit dans un terminal MT. On comprendra qu*'a fortiori,* le serveur ARX n'élimine aucun message.

Dans la suite de la présente description, on appellera « demi-appel sortant » l'ensemble des messages de signalisation échangés entre un terminal mobile MT appelant et le commutateur VCX et « demi-appel entrant » l'ensemble des messages de signalisation échangés entre le commutateur VCX et un terminal mobile MT appelé.

Selon l'invention, pour établir une connexion au niveau usager, on met en oeuvre une phase d'appel dite préliminaire suivie d'une phase d'appel proprement dite. Comme on le comprendra par la suite, la première phase permet l'ouverture d'un canal de signalisation alors que la seconde permet l'ouverture d'un canal usager pour le transport des informations liées au trafic usager.

Pour l'ouverture de ces canaux, les échanges de messages de signalisation entre les terminaux MT et le commutateur VCX sont conformes aux recommandations décrites dans les normes. Les équipements ATM d'extrémités possèdent donc les piles de protocoles standard, par exemple, les piles des protocoles SSCOP et Q2931.

On rappelle que, pour établir et libérer un canal usager, c'est le protocole de niveau 3 tel que celui normalisé Q2931 qui est mis en oeuvre. Pour l'acheminement des messages de signalisation de ce protocole Q2931, les liaisons de signalisation doivent être sécurisées, ce qui implique la mise en oeuvre préalable d'un protocole de niveau 2, tel que celui normalisé nommé SSCOP. Ce protocole de sécurisation SSCOP contrôle en permanence l'intégrité des connexions entre les terminaux MT et les fonctions de commande implantées dans le commutateur VCX.

Le maintien d'une liaison pour assurer le transport des messages émis par le protocole de sécurisation SSCOP ne peut être assuré en permanence dans la mesure où elle consommerait des ressources radio et que ces dernières sont rares et chères. Selon l'invention, chaque appel est sécurisé par la mise en oeuvre du protocole de sécurisation, du type SSCOP, mais c'est en réalité un faisceau de liaisons qui est établi à la demande entre, d'une part, le commutateur VCX et, d'autre part, tous les terminaux MT en phase d'appel et en phase de communication. Pour un terminal MT donné, c'est toute la liaison entre le commutateur VCX et ce terminal MT qui est établie pendant la phase d'établissement d'un appel puis qui est rompue pendant la phase de libération de la communication. Les piles du protocole de sécurisation SSCOP ne sont implantées que dans le commutateur VCX et dans les terminaux MT, ce qui présente l'avantage d'être plus simple et moins coûteux en matériels.

Il en est de même des piles du protocole d'établissement/libération Q2931 des canaux usager qui ne sont donc implantées que dans le commutateur VCX et dans les terminaux MT.

Les procédures d'établissement des liaisons pour le transport des messages émis par le protocole de sécurisation SSCOP et par le protocole d'établissement/libération Q2931 sont différentes selon qu'il s'agit d'un demi-appel entrant ou d'un demi-appel sortant.

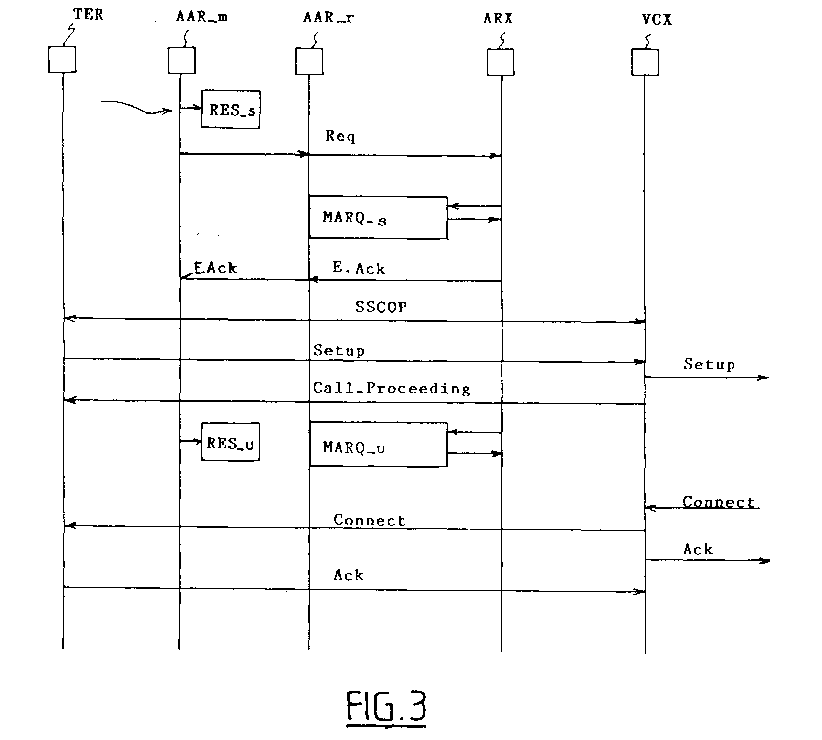

On va maintenant considérer, en relation avec la Fig. 3, l'établissement d'une communication lorsque c'est le terminal qui appelle. Il s'agit donc d'un demi-appel sortant.

Le terminal MT qui appelle réserve, par la mise en oeuvre du protocole RES_s les ressources radio nécessaires à l'acheminement du trafic de signalisation puis émet, via la liaison radio ainsi formée entre les unités AAR_m et ARR_r, un message d'appel Req à l'unité d'adaptation ARR_r de la borne radio BR sous laquelle le terminal est localisé. Celle-ci adresse vers le serveur ARX le message Req via un canal spécialisé dont les identificateurs de conduit et circuit virtuels réservés sont respectivement VPI_rss et le VCI_rss. Ce canal est permanent et est défini à partir de chaque borne pour adresser le serveur ARX.

Le serveur ARX détermine un identifiant de circuit virtuel de signalisation VCI_sig et établit une correspondance entre l'adresse temporaire @mobile contenue dans le message Req et l'identifiant VCI_sig. Cette adresse temporaire @mobile a été allouée au mobile alors qu'il était à l'état de veille sous la couverture du réseau d'accès à des mobiles RLAM.

Le serveur ARX active alors le protocole PRSS de gestion du réseau RLA afin d'effectuer la commande du marquage MARQ_s d'un canal de signalisation dans le réseau d'accès RLA dont l'identificateur de circuit virtuel est VCI_sig. On notera que l'établissement de l'identificateur de circuit virtuel VCI_sig suffit à définir un canal de signalisation dans le réseau local RLA dans la mesure où tous les messages de signalisation sont portés par un conduit permanent de signalisation prédéfini dans le réseau RLA.

A l'issue de ce marquage, le serveur ARX envoie un message d'acquittement d'établissement E_Ack vers la borne BR considérée via un canal identifié par l'identifiant de conduit virtuel VPl_st_x et l'identifiant de circuit virtuel VCI_sig du canal de signalisation précédemment défini du réseau RLA. L'identifiant de conduit virtuel VPl_st_x est celui d'un conduit permanent établi entre le serveur ARX et la borne particulière BR identifiée par x. Un ensemble de conduits point à point doit ainsi être construit dans le réseau local d'accès RLA pour assurer le transport des informations de signalisation entre ARX et les bornes BR.

Le message d'acquittement Ack est ensuite reçu par le terminal MT.

A ce stade, il existe, entre le terminal MT et le commutateur VCX, une liaison virtuelle ouverte identifiée, dans le réseau local RLA, par l'identifiant VCI_sig. Le protocole de sécurisation SSCOP, étant implanté uniquement dans le commutateur VCX et dans le terminal MT, est donc maintenant mis en oeuvre. Conformément à la norme, il consiste en l'envoi d'un message de déclenchement du protocole de sécurisation BEGIN, sa réponse d'acquittement puis ensuite des échanges périodiques de tests POLL acquittés par des réponses STAT.

La phase d'appel subséquente se déroule en utilisant le canal de signalisation qui a été établi ci-dessus. Elle consiste, par exemple, en la mise en oeuvre du protocole normalisé Q2931. Conformément à cette norme, il y a émission, à partir du terminal MT, d'un message de demande de connexion Setup. Le commutateur VCX analyse le contenu du message Setup et répond par un message d'acquittement Call_Proceeding qui contient l'identifiant de circuit virtuel VCI_dat alloué à la communication. Le message de demande de connexion Setup est émis en direction du terminal appelé avec lequel le terminal MT appelant veut entrer en communication. On notera que ce terminal peut être local (sous la couverture du réseau local d'accès RLAM) ou au contraire externe.

Le serveur ARX intercepte le message d'acquittement Call_Proceeding émis par le commutateur VCX et active alors de nouveau le protocole PRSS de gestion du réseau local RLA. Celui-ci va alors procéder au marquage MARQ_u d'une demi-connexion ATM dans le réseau local RLA dont l'identifiant de circuit virtuel VCI_dat est celui qui a été attribué par le commutateur VCX. Ce protocole PRSS va également réserver, par la mise en oeuvre du protocole RES_u, les ressources radio nécessaires pour l'acheminement du trafic usager. Les messages émis par le protocole PRSS sont transportés dans le réseau local d'accès RLA sur un canal ATM identifié par un identifiant de conduit virtuel VPI réservé, par exemple 80, et l'identifiant de circuit virtuel VCI-sig alloué au canal de signalisation.

Pendant ce temps la procédure d'appel se déroule entre le commutateur VCX et le terminal appelé. A la réception du message de connexion Connect émis par le terminal appelé, le commutateur VCX adresse, au terminal appelant, un message Connect et, au terminal appelé, un message d'acquittement de connexion Ack.

A la réception du message Connect, le terminal appelant MT adresse au commutateur VCX un message d'acquittement de connexion Ack. La communication est établie.

Le trafic usager est transporté, dans le réseau local RLA, sur la demi-connexion identifiée par l'identifiant de circuit virtuel VCI_dat. Quant au trafic des messages émis périodiquement pendant toute la durée de la communication par le protocole de sécurisation SSCOP (instructions POLL et STAT) pour contrôler l'intégrité de cette demi-connexion, il est transporté sur la demi-connexion identifiée par l'identifiant de circuit virtuel de signalisation VCI_sig.

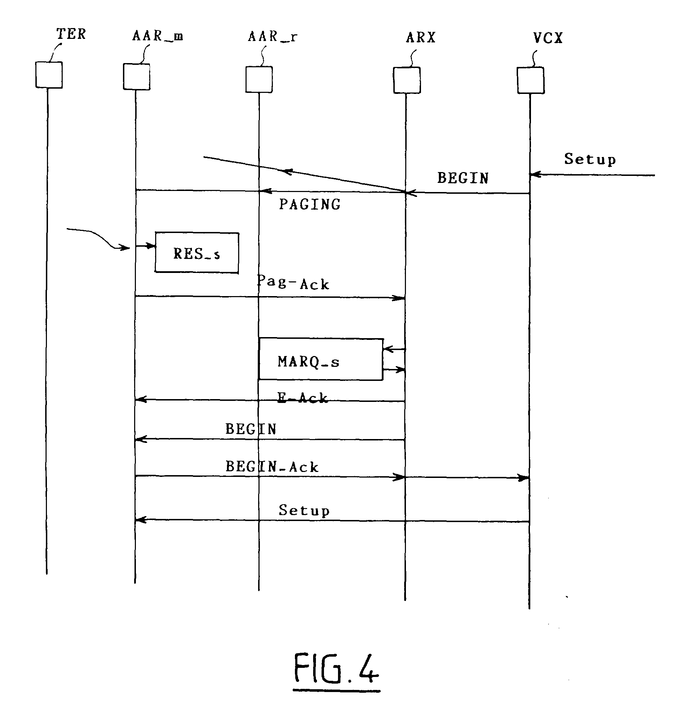

On considère maintenant, en relation avec la Fig. 4, le déroulement d'un appel émanant d'un terminal appelant et adressé à un terminal mobile appelé. Le terminal mobile MT appelé est localisé à l'intérieur de la zone géographique couverte par les bornes radio du réseau d'accès RLAM. Il est déjà identifié par un identificateur de conduit virtuel VPl_u, mais on ne connaît pas l'adresse physique de la borne radio BR sous laquelle il s'est localisé (ou a été localisé).

Dans cette situation, le commutateur VCX reçoit un message de demande de connexion Setup qui émane de la procédure d'établissement de connexion Q2931 du terminal appelant. Constatant que la liaison de niveau 2 n'existe pas, le commutateur VCX active le protocole de sécurisation SSCOP et lance, de ce fait, une procédure de tentative d'établissement de cette liaison. Pour ce faire, il émet un message de déclenchement BEGIN dont il attend une réponse.

Le message de demande de connexion Setup porte le numéro (code E164, par exemple) du terminal appelé. Ce terminal, s'il est à l'état de veille sous la couverture du RLAM, est identifié dans une table d'allocation du commutateur VCX qui fait correspondre à ce numéro un identificateur de conduit virtuel VPI_u. Le message BEGIN du protocole SSCOP est donc transmis par le canal de signalisation virtuel identifié par cet identificateur VPl_u et par l'identificateur de circuit virtuel réservé à la signalisation, par exemple 5.

Le serveur d'adaptation ARX intercepte le message de déclenchement BEGIN du protocole de sécurisation SSCOP et déclenche alors un protocole de recherche de terminal, nommé dans la technique PAGING. Il établit une correspondance entre l'identificateur VPI_u porté par l'en-tête des cellules du message de déclenchement BEGIN et l'adresse logique @mobile du terminal appelé. Le message du protocole de PAGING, qui contient donc l'adresse logique @mobile du terminal appelé est diffusé vers tous les mobiles localisés sous le réseau RLAM.

On notera que le message du protocole de PAGING est transmis sur un canal permanent de diffusion dont les identificateurs de conduit et de circuit virtuels VPl_pag et VCI_pag sont réservés.

Celui qui a l'adresse logique @mobile se reconnaît destinataire du message du protocole de PAGING et active alors la procédure RES_s de réservation des canaux radio pour le trafic de signalisation. Il renvoit par ailleurs un message d'acquittement Ack au serveur ARX. Ce message est transporté par un canal permanent défini à partir de chaque borne pour adresser le serveur ARX.

Comme précédemment, le serveur ARX détermine un identifiant de circuit virtuel de signalisation VCI_sig et établit une correspondance entre l'adresse temporaire logique @mobile et l'identifiant VCI_sig. Le serveur ARX active alors le protocole PRSS de gestion du réseau local RLA, ce qui a pour effet de commander le marquage MARQ_s d'un canal de signalisation VCI_sig dans le réseau d'accès RLA.

A l'issue de ce marquage, le serveur ARX envoie un message d'acquittement E_Ack vers la borne BR considérée via un canal identifié par l'identifiant de conduit virtuel VPl_st_x et l'identifiant de circuit virtuel VCI_sig du canal de signalisation précédemment défini du réseau RLA. L'identifiant de conduit virtuel VPl_st_x est celui du conduit permanent établi entre le serveur ARX et la borne particulière BR identifiée par x. Le message d'acquittement E_Ack est ensuite reçu par le terminal MT.

A ce stade, il existe, entre le terminal MT et le commutateur VCX, une liaison virtuelle ouverte identifiée, dans le réseau local RLA, par l'identifiant VCI_sig.

Le message de déclenchement BEGIN qui a déclenché le protocole de recherche de terminal PAGING a été provisoirement stocké dans le serveur d'adaptation ARX jusqu'à ce que les ressources radio et ATM soient réservées. Maintenant que le canal de signalisation est ouvert, le message de commencement BEGIN est émis par le serveur d'adaptation ARX à destination du terminal appelé, qui l'acquitte alors en envoyant au commutateur VCX un message d'acquittement BEGIN_Ack. La liaison de niveau 2 est établie. Le commutateur VCX le constate et émet immédiatement, en direction du terminal MT, un message de demande de connexion Setup qui initialise la procédure d'appel proprement dite.

La suite de la procédure est identique à celle qui a été mise en oeuvre pour les demi-appels sortants.

On notera que le commutateur VCX ne doit émettre des messages de déclenchement BEGIN que lorsque, d'une part, il décode des messages de demande de connexion Setup et lorsque, d'autre part, la liaison pour le transport des messages du protocole de sécurisation SSCOP n'est pas encore établie. En effet, outre ce cas particulier, il ne doit pas émettre de tels messages BEGIN lorsque les liaisons internes au réseau local RLA et les liaisons radio ont été libérées, ce qui aurait pour effet de relancer la procédure d'appel PAGING.

Pour résoudre ce problème, on propose qu'au cas où le message de déclenchement BEGIN émis par le commutateur VCX ne reçoit pas à l'expiration d'un temps prédéterminé d'acquittement attestant l'établissement d'une liaison de niveau 2 entre le terminal appelé MT et le commutateur VCX, un nouveau message de déclenchement BEGIN est lancé, le nombre de fois que le message BEGIN est ainsi lancé étant limité, par exemple à cinq fois.

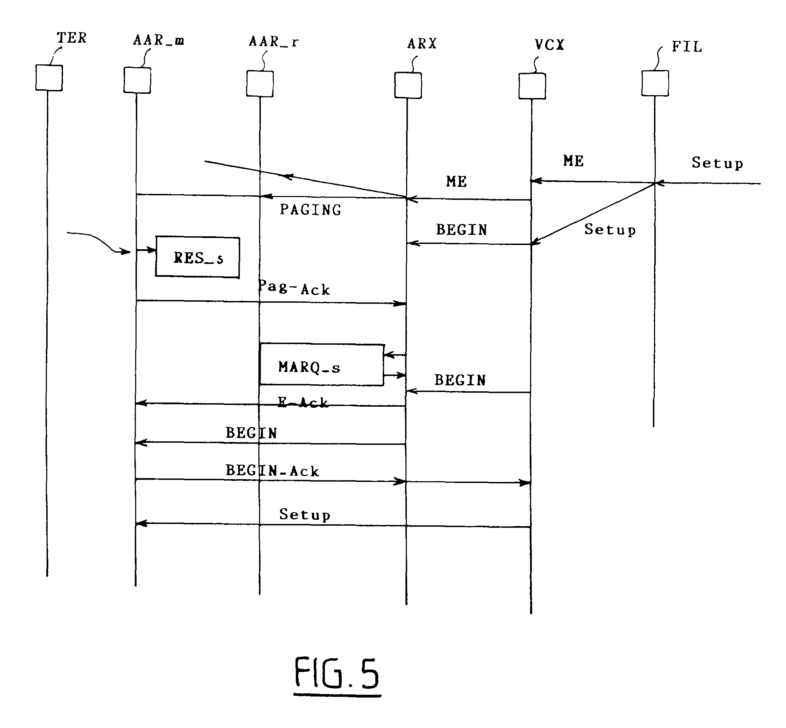

On a représenté à la Fig. 5 un autre mode de réalisation pour résoudre également le problème évoqué ci-dessus.

Selon ce mode de réalisation, les messages de signalisation normalement transmis au commutateur VCX transitent au préalable par un serveur ou filtre FIL. Celui-ci a pour fonction, de filtrer ces messages et, à la réception d'un tel message Setup correspondant à un appel entrant (appel d'un terminal MT qui se trouve sous la couverture du réseau d'accès), de transmettre, via le commutateur VCX ou par une liaison spécialisée, au serveur d'adaptation ARX un message ME de déclenchement de la procédure de recherche de terminal PAGING. Intercepté par le serveur ARX, ce message ME a pour effet de déclencher la procédure PAGING, laquelle est alors identique à celle qui est décrite en relation avec le mode précédent de mise en oeuvre.

La suite de la procédure est identique à celle qui concerne le mode de réalisation précédent.

En effet, la procédure de recherche PAGING déclenche la procédure RES_s laquelle réserve les ressources radio nécessaires pour le trafic de signalisation. Un message Pag_Ack est alors transmis au serveur ARX. Celui-ci, à l'instar du mode de réalisation précédent, commande le marquage MARQ_s du canal de signalisation dans le réseau RLA. Une fois cette opération terminée, un message d'acquittement E_Ack est transmis au terminal MT.

Pendant ce temps, le commutateur VCX émet périodiquement des messages de déclenchement BEGIN qui, lorsque le canal de signalisation est établi, est transmis au terminal MT. Celui-ci y répond par un message d'acquittement BEGIN_Ack.

Lorsque les liaisons entre un terminal MT et le commutateur VCX sont libérées, le commutateur VCX émet périodiquement des messages de déclenchement BEGIN, lesquels n'ont pas pour effet, comme précédemment, de déclencher la procédure de recherche de terminal PAGING. En effet, celle-ci n'est pas déclenchée par un tel message BEGIN mais par un message spécifique ME émis par le serveur FIL.

L'utilisateur peut être conduit à établir successivement plusieurs communications à partir de son terminal MT en les « superposant » ; par exemple il commence par une communication interpersonnelle telle qu'une visiophonie qu'il accompagne ensuite d'une consultation sur le réseau Intemet. Dans ce cas, il est inutile d'ouvrir un autre canal de signalisation, la phase préliminaire devient donc inutile avant d'établir l'appel vers le réseau Internet.

Pour la libération de la communication par le réseau, le commutateur VCX émet vers le terminal MT un message de libération Release. Si c'est le terminal MT qui est à l'origine de la libération de la communication, c'est lui qui émet un message de libération Release.

En tout état de cause, le serveur ARX intercepte ce message de libération Release et déclenche alors le protocole interne PRSS qui a pour but de libérer les demi-connexions ATM de transport de la signalisation et du trafic de données, ainsi que la libération des ressources radio. La liaison pour le transport des messages du protocole de sécurisation SSCOP est maintenant physiquement rompue. Les terminaux MT et le commutateur VCX tenteront en vain de la rétablir en émettant des messages de commencement BEGIN, soit indéfiniment, soit en nombre limité.

Après la libération d'une communication, le serveur ARX arme une temporisation d'une durée suffisante pour masquer tous les messages de commencement BEGIN en provenance du commutateur VCX et qui portent le même identificateur de conduit virtuel VPl_u que celui affecté à la dite communication. En effet, le serveur ARX doit ignorer absolument ces messages de commencement BEGIN sinon il se lancerait dans une phase préliminaire de recherche de terminal PAGING qui dans ce cas précis n'a aucun sens.

Dans le cas où l'utilisateur a initialisé une application multimédia, la libération aura pour objet la seule libération des ressources qui étaient consommées par la communication rompue. Le canal de signalisation restera ouvert.

## Revendications

1. Réseau d'accès pour des terminaux mobiles du type qui est constitué d'un commutateur (VCX) connecté, d'une part, à au moins un autre réseau extérieur et, d'autre part, un réseau local d'accès (RLA) lui-même connecté à une pluralité de bornes radio (BR), chaque borne (BR) étant prévue pour entrer en communication aux moyens de ressources radio avec des terminaux mobiles (MT), caractérisé en ce que les protocoles d'établissement et de libération des canaux de signalisation et des canaux usager entre ledit commutateur (VCX) et un terminal (MT) et des protocoles de sécurisation (SSCOP) desdits canaux sont mis en oeuvre, uniquement au niveau dudit commutateur (VCX) et desdits terminaux (MT), par échange de messages de signalisation entre eux, et en ce qu'il comporte un serveur d'adaptation (ARX) qui est prévu pour intercepter de manière transparente les messages émis par lesdits protocoles de signalisation et pour mettre en oeuvre, en fonction du contenu desdits messages interceptés, des protocoles de gestion dudit réseau local d'accès (RLA) afin d'effectuer l'établissement et la libération des canaux de signalisation puis des canaux usager dans ledit réseau local d'accès et d'en réserver les ressources radio correspondantes.

2. Réseau d'accès pour des terminaux mobiles selon la revendication 1, caractérisé en ce que, lorsque le commutateur (VCX) reçoit une demande de connexion (Setup) avec un terminal (MT) qui se trouve sous la couverture dudit réseau (RLAM), un processus de recherche de terminal (PAGING) est lancé par ledit serveur d'adaptation (ARX) auquel ledit terminal (MT) répond en réservant les ressources radio nécessaires au trafic de signalisation (RES_s) puis par l'envoi d'un message d'acquittement (PAGING_Ack), ledit serveur (ARX) déterminant alors les identifiants (VPI, VCI_sig) d'un canal de signalisation dans ledit réseau local d'accès (RLA) et établissant ledit canal de signalisation.

3. Réseau selon la revendication 2, caractérisé en ce que, lorsque ledit commutateur (VCX) reçoit une demande de connexion (Setup) avec un terminal (MT) qui se trouve sous la couverture dudit réseau (RLAM), il émet un message de déclenchement du protocole de sécurisation (BEGIN) dont l'interception par ledit serveur (ARX) déclenche ledit processus de recherche de terminal (PAGING), ledit terminal (MT) transmettant un message d'acquittement (BEGIN_Ack) lorsque ledit canal de signalisation est établi entre ledit terminal (MT) et ledit commutateur (VCX).

4. Réseau selon la revendication 3, caractérisé en ce que, si le commutateur (VCX) n'a pas reçu de message d'acquittement (BEGIN_Ack) à l'expiration d'un temps prédéterminé, il émet un nouveau message de déclenchement du protocole de sécurisation (BEGIN), le nombre de fois que le commutateur (VCX) ré-émet des messages de déclenchement du protocole de sécurisation (BEGIN) étant limité, par exemple à cinq.

5. Réseau d'accès pour des terminaux mobiles selon la revendication 2 précédentes, caractérisé en ce qu'il comporte un serveur (FIL) par lequel transite tous les messages de signalisation à destination dudit commutateur (VCX), ledit serveur (FIL), à la réception d'un message de demande de connexion (Setup) avec un terminal (MT) qui se trouve sous la couverture dudit réseau (RLAM), transmettant au serveur (ARX) un message (ME) pour qu'il déclenche ledit processus de recherche de terminal (PAGING), ledit terminal (MT) transmettant un message d'acquittement (BEGIN_Ack) lorsque ledit canal de signalisation est établi entre ledit terminal (MT) et ledit commutateur (VCX).

6. Réseau d'accès pour des terminaux mobiles selon une des revendications précédentes, caractérisé en ce que, lorsqu'un terminal (MT) qui se trouve sous la couverture dudit réseau effectue un appel, il réserve les ressources radio nécessaires pour le trafic de signalisation (RES_s) puis émet un message de demande de connexion (Req) à destination du seul serveur d'adaptation (ARX) qui détermine alors les identifiants (VPI, VCI_sig) d'un canal de signalisation dans ledit réseau local d'accès et établit ledit canal de signalisation.

7. Réseau d'accès pour des terminaux mobiles selon la revendication 6, caractérisé en ce que ledit message (Req) contient l'adresse logique temporaire (@mobile) qui a été attribuée audit terminal (MT) lorsque celui-ci était à l'état de veille sous la couverture dudit réseau (RLAM), ledit serveur (ARX), à la réception dudit message (Req), établissant une correspondance entre ladite adresse (@mobile) et lesdits identifiants (VPI, VCI_sig) dudit canal de signalisation.

8. Réseau d'accès pour des terminaux mobiles selon la revendication 6 ou 7, caractérisé en ce qu'à l'issue de l'établissement dudit canal de signalisation, ledit protocole (SSCOP) de signalisation pour la sécurisation de la liaison entre le commutateur (VCX) et ledit terminal (MT) est déclenché.

9. Réseau d'accès pour des terminaux mobiles selon une des revendications précédentes, caractérisé en ce qu'à l'issue de l'établissement du canal de signalisation dans ledit réseau local (RLA) et après le déclenchement du protocole de sécurisation (SSCOP), le protocole d'établissement de la connexion dans le plan usager est mis en oeuvre, le serveur d'adaptation (ARX) interceptant les messages émis par ledit protocole afin de réserver les ressources radio nécessaires au trafic usager et d'établir un canal usager dans ledit réseau local d'accès (RLA).

10. Réseau d'accès pour des terminaux mobiles selon une des revendications précédentes, caractérisé en ce que ledit réseau local d'accès (RLA) est constitué d'un réseau de distribution (RD) relié, pour sa connexion au commutateur (VCX), à un brasseur de conduits virtuels (PONT), ledit serveur d'adaptation (ARX) étant relié en dérivation dudit brasseur (PONT) de manière que seules les cellules portant dans leur en-tête des identificateurs de canaux spécifiques ou l'identificateur des canaux de signalisation au niveau dudit commutateur (VCX) ou au niveau desdits terminaux (MT), passent par ledit serveur d'adaptation (ARX).

11. Réseau d'accès pour des terminaux mobiles selon une des revendications précédentes, caractérisé en ce qu'un canal permanent point à point est établi entre chacune des bornes (BR) et le serveur d'adaptation (ARX) pour le transport des cellules portant ledit message de demande de connexion (Req) émanant dudit terminal (MT) appelant se trouvant sous la couverture de la borne (BR) correspondante ou les cellules portant un message d'acquittement de recherche de terminal (PAGING_Ack).

12. Réseau d'accès pour des terminaux mobiles selon une des revendications précédentes, caractérisé en ce qu'est établi entre le serveur d'adaptation (ARX) et chaque borne (BR), un conduit virtuel permanent pour le transport des cellules portant des messages d'acquittement d'établissement de canal de signalisation (E_Ack), lesdites cellules portant un identificateur de circuit virtuel égal à l'identificateur de circuit virtuel (VCI_sig) dudit canal de signalisation.

13. Réseau d'accès pour des terminaux mobiles selon une des revendications précédentes, caractérisé en ce qu'est établi un canal permanent point à multipoint entre le serveur d'adaptation (ARX) et les bornes (BR) dudit réseau pour la diffusion du message de recherche de terminal (PAGING).

14. Réseau d'accès pour des terminaux mobiles selon une des revendications précédentes, caractérisé en ce que lorsque ledit serveur d'adaptation (ARX) intercepte un message de libération (Release) émanant soit du commutateur (VCX), soit d'un terminal (MT), il commande la libération les demi-connexions dans le réseau local d'accès (RLA) et des ressources radio.

15. Réseau d'accès pour des terminaux mobiles selon la revendication 14, caractérisé en ce qu'il comporte des moyens pour masquer, pendant un temps prédéterminé, les messages de déclenchement du protocole de sécurisation (BEGIN) émis par le commutateur (VCX) ou un terminal (MT) lorsque la libération du canal de signalisation a eu lieu.
